# EUROPÄISCHE PATENTSCHRIFT

(11) **EP 3 981 279 B1**
(45) Veröffentlichungstag und Bekanntmachung des Hinweises auf die Patenterteilung: **07.06.2023**
(21) Anmeldenummer: 20201120.1
(22) Anmeldetag: 09.10.2020
(51) Int. Cl.: A43B 17/00, A43B 17/14, B29D 35/14, A43B 7/14

(54) **ORTHOPÄDISCHER SCHUHEINLAGE-ROHLING UND VERFAHREN ZU DESSEN HERSTELLUNG**
ORTHOPAEDIC SHOE INSERT BLANK AND METHOD FOR PRODUCING THE SAME
SEMELLE INTÉRIEURE ORTHOPÉDIQUE ET SON PROCÉDÉ DE FABRICATION

(43) Veröffentlichungstag der Anmeldung: 13.04.2022
(73) Patentinhaber: Spannrit GmbH, 63801 Kleinostheim (DE)
(72) Erfinder: Katzer, Roland, 63801 Kleinostheim (DE)
(74) Vertreter: Kuhnen & Wacker Patent- und Rechtsanwaltsbüro PartG mbB

(56) Entgegenhaltungen:
- EP-A1- 3 513 675
- DE-A1-102010 008 627

## Beschreibung

Die vorliegende Erfindung betrifft einen orthopädischen Schuheinlage-Rohling, der im RIM-Schäumverfahren aus zwei oder mehr PU-Schaumkunststoffen hergestellt ist. Die vorliegende Erfindung betrifft weiter ein Verfahren zum Herstellen eines solchen orthopädischen Schuheinlage-Rohlings mittels des RIM-Schäumverfahren.

Orthopädische Schuheinlage-Rohlinge werden im RIM-Schäumverfahren im Stand der Technik bereits vielfach hergestellt, wobei im Stand der Technik zum Herstellen von PU-Schaumkunststoffeinlegesohlen, die zwei oder mehr PU-Schaumkunststoffe aufweisen, üblicherweise für jeden zu erzeugenden PU-Schaumkunststoff ein separater Schäumschritt durchgeführt wird. Orthopädische Schuheinlagen erfordern meist ein sohlenstabilisierendes Fersenteil, z.B. einen Fersenkeil, und/oder einen festeren Längsgewölbebereich, der das Längsgewölbe des Fußes des Trägers der Sohle stützt. Diese üblicherweise härter ausgebildeten Bereiche, werden zumeist zumindest auf der fußzugewandten Seite gepolstert, z.B. mittels eines weicheren PU-Schaumkunststoffs, der beispielsweise in Form eines Polsterkörpers ausgeformt ist. Ein solcher Polsterkörper erstreckt sich dabei zumindest über Teilbereiche einer Schuheinlage, die einen angenehmen Tragekomfort für den Träger der Schuheinlage bereitstellen sollen, also auch in Bereichen in denen keine orthopädisch wirksamen weiteren Bauteile angeordnet sind, wie etwa im Vorderfuß oder im Zehenbereich.

Orthopädische Bauteile, wie beispielsweise Pelotten, Fersenaufnahmen, Fersenkeile oder Längsgewölbestützen, werden herkömmlich vorproduziert und als Einlegeteile in die RIM-Schäumform vor dem Einbringen der den PU-Schaumkunststoff erzeugenden Komponenten eingelegt und mit PU-Schaumkunststoff angeschäumt, und so in den Schuheinlage-Rohling integriert. In anderen Verfahren werden zwei oder mehr RIM-Schäumschritte ausgeführt, bei denen beispielsweise zunächst ein Fersenteil und/oder ein Längsgewölbekeil in einem ersten Schäumschritt aus einem harten PU-Schaumkunststoff geschäumt wird und nach Umsetzen oder durch Verwenden unterschiedlicher zweiter Schäumformhälften, die verschiedene Kavitäten abgrenzen, in einem zweiten Schäumschritt ein Polsterkörper an die zuvor geschäumten Bauteile zum Ausbilden des Schuheinlage-Rohlings angeschäumt wird.

So wird beispielsweise in EP 3 513 675 B1 ein Fersenkeil (Kernteil) mittels Spritzgießen an eine flexible Lage angeformt und zusammen mit der flexiblen Lage im nächsten Schritt in eine RIM-Schäumform eingelegt, wobei auf einer Seite der flexiblen Lage ein Polsterkörper angeschäumt wird.

Aus DE 20 2007 018 343 U1 ist eine Schaumkunststoff-Einlegesohle bekannt, zu deren Herstellung durch Aufschäumen von Komponenten A, beispielsweise Polyol, mit Komponenten B, beispielsweise Isocyanat, mehrere Bereiche unterschiedlicher Materialhärte erzeugt werden. Die unterschiedlichen Materialhärten werden durch Mischen und Einbringen der Komponenten A und der Komponenten B an unterschiedlichen Stellen in der Schäumform in unterschiedlichen Mischungsverhältnissen und/oder durch Mischen unterschiedlicher Komponenten A und B erzeugt. Dabei werden die unterschiedlichen Ausgangsmaterialien an verschiedenen Stellen in die Schäumform eingebracht, wobei die Schäumfronten in der Schäumform beim Aufschäumen aufeinandertreffen und sich die Schäume in diesen Bereichen (unkontrolliert) vermischen und miteinander verbinden. Dabei sind nach dem Einbringen der Komponenten A und B mittels Mischköpfen an verschiedenen Stellen der Schäumform die Schaumausbreitungsrichtung und Schaumausbreitungsgeschwindigkeit nur schwer kontrollierbar bzw. vorhersehbar, so dass definierte Bereichsgrenzen zwischen Bereichen mit weicheren oder härteren geschäumten Teilkörper in abgegrenzten Bereichen nicht erzeugbar sind. Die Bereiche mit unterschiedlichen Härten gehen fließend und meist ohne erkennbare Wiederholbarkeit ineinander über.

DE102010008627A1 beschreibt eine Schuheinlage mit Vlies, welches ein nicht-elastisches Textil darstellt, welches zumindest in Teilbereichen schichtartig in der Schuheinlage angeordnet ist und von einem schäumbaren Kunststoff durchschäumbar ist. Nach dem Durchschäumen mit Kunststoff soll das Textil auch unter Belastung formstabil bleiben. Aufgrund der Durchschäumbarkeit des nicht-elastischen Textils ist derselbe schäumbare Kunststoff auf beiden Seiten des Textils angeordnet.

Aufgabe der Erfindung ist es daher, ein Verfahren zum Herstellen von orthopädischen Schuheinlage-Rohlingen mittels des RIM-Schäumverfahrens anzugeben, mit dem orthopädische Schuheinlage-Rohlinge herstellbar sind, die zwei oder mehr PU-Schaumkunststoffbereiche aufweisen, die einen Teil des Sohlengrundkörpers bilden. Dabei soll das Verfahren kostengünstig und robust ausgestaltet sein, sowie eine hohe Wiederholbarkeit für die Herstellung orthopädischer Schuheinlage-Rohlinge mit mindestens zwei Härtebereichen aufweisen.

Die erfindungsgemäße Aufgabe wird mit einem orthopädischen Schuheinlage-Rohling nach Anspruch 1 gelöst, wobei die von Anspruch 1 abhängigen Unteransprüche auf bevorzugte Ausführungsformen gerichtet sind. Die Aufgabe wird ferner durch Verfahren nach Anspruch 7 gelöst, wobei bevorzugte Ausführungsformen in den von Anspruch 7 abhängigen Unteransprüchen angegeben sind.

Das erfindungsgemäße Verfahren löst die gestellte Aufgabe dadurch, dass eine flexible Lage, derart auf eine untere Schäumformhälfte einer RIM-Schäumform eingespannt und fixiert wird, dass das Formnest in der unteren Schäumformhälfte teilweise überdeckt ist. Ein solches teilweises Abdecken des Formnestes kann beispielsweise mit einer flexiblen Lage erreicht werden, welche sich nicht über die gesamte Länge des Schuheinlage-Rohlings erstreckt und/oder die eine Freimachung, insbesondere eine Öffnung oder einen Durchbruch, im Bereich des Formnestes aufweist. Ein solcher Durchbruch kann in einer Ausführungsform auch durch einen Kreuzschnitt in die flexible Lage eingebracht werden. Durch die so eingelegte/eingespannte und fixierte flexible Lage, beispielsweise aus einem Textil oder einem elastischen Materialsind Teilbereiche der formgebenden Oberflächen, d.h. des Formnestes der unteren Schäumform für einen Materialeintrag durch einen RIM-Mischkopf zugänglich. Dies ermöglicht einen Materialeintrag an zumindest zwei Stellen derart, dass die den PU-Schaumkunststoff erzeugenden Komponenten an einer ersten Materialeintragstelle direkt auf die formgebenden Oberflächen des Formnestes in die untere Schäumformhälfte eingebracht werden können. Weiter erfindungsgemäß werden an einer zweiten Materialeintragstelle die den PU-Schaumkunststoff erzeugenden Komponenten auf die Oberseite der flexiblen Lage eingebracht.

Grundgedanke der Erfindung ist ein Materialeintrag an zwei Stellen derart, dass sich von einer ersten Materialeintragstelle der sich bildende PU-Schaumkunststoff so ausbreiten kann, dass dieser die flexible Lage in Teilbereichen unterschäumt, und von einer zweiten Materialeintragstelle auf der Oberseite der flexible Lage der sich dort bildende PU-Schaum-kunststoff oberhalb der flexible Lage ausbreitet, sodass nach einem Ausreagieren der den jeweiligen PU-Schaumkunststoff erzeugenden Komponenten zwei geschäumte Teilbereiche eines Schuheinlage-Rohlings vorliegen, die auf gegenüberliegenden Seiten der flexible Lage angeordnet sind, womit die beiden PU-Schaumkunststoffe nicht miteinander in Berührung kommen. Dadurch wird erreicht, dass die beiden Teilbereiche in einem RIM-Schäumzyklus, also mit nur einem Schließen und Öffnen einer RIM-Schäumform erzeugt werden können, ohne dass es zu einem undefinierten ineinanderlaufen (-schäumen) der PU-Schaumkunststoff kommt. Die Ausgangsstoffe zum Schäumen, als auch die entstehenden beiden PU-Schaumkunststoffe sind jederzeit durch zumindest die Wandstärke der flexiblen Lage voneinander getrennt.

Im weiteren Verlauf der Erfindungsbeschreibung wird zur deren besserer Lesbarkeit die Erfindung und bevorzugte Ausführungsform anhand einer flexiblen Lage beschrieben, die Freimachung, insbesondere eine Öffnung im Sohlenbereich aufweist, die bei eingespannter flexible Lage einen Teilbereich des Formnestes nicht abdeckt, beispielsweise den Bereich des Fersendorns. Fachübliche andere Ausführungen sind, wie oben bereits angedeutet, vom Erfindungsgedanken umfasst, solange ein Einspannen der flexible Lage derart möglich ist, dass ein Teilbereich der flexible Lage unterschäumt und ein anderer Teilbereich überschäumt wird, wobei die flexible Lage die beiden Schäume physisch so voneinander beabstandet, dass ein Vermischen der PU-Schäume verhindert wird.

Zeitgleich oder zeitversetzt vor oder nach dem Eintrag des Materials durch die Freimachung in der flexiblen Lage wird zum Herstellen eines erfindungsgemäßen orthopädischen Schuheinlage-Rohlings an zumindest einer weiteren Materialeintragstelle weiteres Ausgangsmaterial zum Erzeugen eines weiteren PU-Schaumkunststoff-Teilkörpers eingebracht, wobei dieser weitere PU-Schaumkunststoff eine andere Materialhärte aufweisen kann, als der PU-Schaumkunststoff des Teilkörpers, dessen Komponenten an der Materialeintragstelle an bzw. in der Freimachung der flexiblen Lage eingebracht wurden.

Nach Einbringen/Eintrag der jeweiligen Komponenten an den Materialeinbringstellen wird die Schäumform geschlossen, d.h. auf die untere Schäumformhälfte wird eine obere Schäumformhälfte angeordnet, so dass die Schäumform unter Ausbildung einer Kavität zum Formen einer Schuheinlage geschlossen ist. Die zuvor eingebrachten Material-Komponenten - jeweils ein Polyol und ein Isocyanat - können nun in der geschlossenen Kavität unter Ausbildung des Grundkörpers des orthopädischen Schuheinlage-Rohlings gemäß der Erfindung aufschäumen. Dabei schäumen die Komponenten, die durch die Freimachung in der flexiblen Lage hindurch eingebracht wurden, unterhalb der flexiblen Lage auf, und die Komponenten, welche an der zumindest einen anderen Materialeintragsstelle in die Schäumform eingebracht wurden, schäumen oberhalb der flexiblen Lage auf. In dem Bereich, in dem die PU-Schäume zusammentreffen würden, verhindert die flexible Lage ein Ineinanderlaufen der Komponenten / Vermischen der beiden PU-Schaumkunststoffe und stellt eine physische Barriere für die beide PU-Schäume dar.

Insgesamt wird der Grundkörper des erfindungsgemäßen orthopädischen Schuheinlage-Rohlings durch zumindest zwei PU-Schaumkunststoff-Teilbereiche gebildet, wovon einer auf der Oberseite des Schuheinlage-Rohlings angeordnet ist und der andere, auf der Unterseite, wobei die flexible Lage die beide Teilbereiche trennt, sodass in dem Teilbereich, der die Oberseite des Schuheinlage-Rohlings bildet, die flexible Lage die Unterseite bildet. Analog bildet flexible Lage die Oberseite des Schuheinlage-Rohlings in dem Bereich, in der der andere Teilbereich die Unterseite bildet.

Nachdem die Komponenten zum Erzeugen der jeweiligen PU-Schaumkunststoffe der einzelnen Teilbereiche vollständig miteinander reagiert haben, kann die Schäumform geöffnet und der Schuheinlage-Rohling mit dem beidseitig daran angeschäumten Grundkörper entnommen werden, wobei auf jeder Seite der flexiblen Lage zumindest ein Teilbereich ausgebildet ist. Nach einem Kontur-Zuschnitt und eventuellen Beziehen mit einer Decke, beispielsweise auf der Oberseite, ist der so hergestellte Schuheinlage-Rohling bereit zum Anpassen an einen Fuß beispielsweise durch einen Schuhorthopäden oder zum Einlegen in einen Schuh.

Für einen einschlägigen Fachmann ist es dabei offensichtlich, dass es für die Ausführbarkeit des erfindungsgemäßen Verfahrens unerheblich ist, ob die formgebenden Oberflächen der unteren Schaumformhälfte die Unterseite oder die Oberseite des Schuheinlage-Rohlings ausbilden. Des Weiteren erkennt der Fachmann, dass das erfindungsgemäße Verfahren nicht auf zwei Materialeintragstellen limitiert ist, und auch mehr als zwei Materialeintragstellen vorhanden sein können.

Ein Gleiches gilt für die oben beschriebene Freimachung in der flexiblen Lage. Auch hier sind weitere Freimachungen in der flexible Lage vorstellbar, durch die Schaumkunststoff-erzeugenden Komponenten in die Schäumform eingebracht werden können, wodurch die Komponenten unterhalb der aufgespannten, flexiblen Lage miteinander reagieren und dadurch aufschäumen können. Grundgedanke der Erfindung ist der, dass pro Schäumzyklus zwei oder mehrere Teilbereiche des Grundkörpers eines Schuheinlage-Rohlings erzeugt werden, wobei zumindest zwei Teilbereiche auf unterschiedlichen Seiten der flexiblen Lage angeordnet sind. Dabei ist eine Freimachung in der flexiblen Lage im Sinne der Erfindung in einem Teilbereich der Schuheinlage, in welchem die flexible Lage nicht vorhanden ist, z.B. eine flexible Lage, die sich nur über ¾ der Länge der Schuheinlage erstreckt. Selbstredend sind Ausführungen der Schäumform vom Erfindungsgedanken umfasst, die mehrere Formnester (Kavitäten) aufweisen, und mit denen zwei, beispielsweise ein Paar, oder mehrere Schuheinlage-Rohlinge in einem Schäumzyklus herstellbar sind.

Im Folgenden soll zur Vereinfachung der Erfindungsbeschreibung und seine Ausführungsformen weiter davon ausgegangen werden, dass die Freimachung in der flexiblen Lage im Fersenbereich der Schuheinlage angeordnet ist. Der Schaumkunststoff, der durch Komponenten erzeugt worden ist, die durch diese Freimachung eingebracht wurden, und den Fersenbereich unterhalb der flexiblen Lage bildet, weist üblicherweise eine höhere Materialhärte auf, um der Ferse des Trägers einer erfindungsgemäßen orthopädischen Schuheinlage eine Seitenführung bereitzustellen. In diesem Bereich bildet die flexible Lage mit Ausnahme des Bereichs der Freimachung die Oberseite der erfindungsgemäßen Schuheinlage aus. Im Vorderfußbereich wird die flexible Lage beispielsweise von oben mit PU-Schaumkunststoff erzeugenden Komponenten benetzt, die dann beim Aufschäumen insbesondere im Vorderfuß- oder auch im Mittelfußbereich einen weicheren Polsterkörper ausbilden. Somit erhält man mit dem erfindungsgemäßen Verfahren einen orthopädischen PU-Schaumkunststoff-schuheinlage-Rohling mit einer flexiblen Lage, die sich beispielsweise über die gesamte Grundfläche des Grundkörpers des Schuheinlage erstreckt, und die zumindest in einem Bereich von unten angeschäumt ist und zumindest in einem zweiten, anderen Bereich von oben angeschäumt ist. Dabei dient die flexible Lage als Trennung zwischen den beiden Bereichen und verhindert ein Vermischen der beiden PU-Schäume. Allerdings kann die flexible Lage ein Überschäumen in Teilbereichen zulassen, sodass in Teilbereichen eine Art Schaumkunststoff-Sandwich entsteht, wobei die flexible Lage die Mittelschicht bildet und die beiden Schäume voneinander trennt. Konstruktiv kann jedoch die Schäumform so gestaltet sein, dass die flexible Lage nach dem Schließen der Schäumform zwei Kavitäten voneinander trennt, also einen Dichtsteg, eine Dichtlippe oder eine Dichtlinie bereitstellt, sodass es zu keiner Überlagerung der beiden PU-Schaumkunststoffe in Dickenrichtung der Schuheinlage kommt.

Ein Abdichten der beiden Kavitäten in der Schäumform kann beispielsweise auch durch ein zeitversetztes und mengenkontrolliertes Einbringen der jeweiligen Materialen für das Erzeugen der beiden PU-Schaumkunststoffe erzielt werden. Schreitet die Schaumfront des einen PU-Schaumkunststoffs vor, so wird die flexible Lage nach oben oder unten gedrückt und begrenzt so das Fortschreiten der Schaumfront des anderen PU-Schaumkunststoffs. Durch geeigneten Zeitversatz für das Einbringen der jeweiligen Ausgangsstoffe für die PU-Schäume und durch entsprechendes Anpassen der Mengen der Ausgangsmaterialien kann so eine hohe Wiederholbarkeit für die Herstellung der erfindungsgemäßen Schuheinlage-Rohlinge erreicht werden. Andere Maßnahmen zum Steuern des Fortschreitens der Schaumfronten, wie etwa ein bereichsweises Erwärmen und Abkühlen der Schäumform oder ein Verengen oder Erweitern des Kavitätsquerschnitts, liegen im Bereich des Könnens des Fachmanns und sind daher vom Erfindungsgedanken ebenfalls umfasst. Genauso ist vom Erfindungsgedanken umfasst, dass Teilbereiche der flexiblen Lage, die zwar im Bereich der Schäumkavität zum Liegen kommen, nicht von PU-Schaumkunststoff angeschäumt werden. So kann eine erfindungsgemäße Schuheinlage beispielsweise im Vorderfußbereich und oder im Zehenbereich lediglich aus der flexiblen Lage bestehen.

Der Fachmann erkennt, dass das Material für die flexible Lage aus einer Vielzahl von Materialien ausgewählt werden kann, wobei einlagige oder mehrlagige Materialien verwendet werden können, die flächig ausgebildet sind und ein Einbringen einer Freimachung mit fachüblichen Mitteln an der für den Materialeintrag vorgesehen Stelle zulassen. Von Vorteil ist, wenn das Material der flexible Lage weitestgehend für die Komponenten undurchlässig ist, die mittels des Mischkopfes einer RIM-Anlage in die Schäumform eingebracht werden. Jedoch kann es ebenfalls von Vorteil sein, dass einzelne Lagen eines mehrlagigen Materials der flexiblen Lage für den PU-Schaumkunststoff durchschäumbar sind, bzw. von diesem benetzbar sind oder diesen aufsaugen können. Hier kann man beispielsweise an ein Vlies denken, das fest mit einer weiteren Schicht der flexiblen Lage verbunden ist, dessen Material mit PU-Schaumkunststoff jedoch keine klebende Verbindung eingeht. Weiter bevorzugt können Materialschichten oder -lagen sein, die die Schaumausbreitung begünstigen oder negativ beeinflussen, damit eine größere Variabilität beim Einbringen der Ausgangsmaterialien für die PU-Schaumkunststoffe an den zumindest zwei Materialeintragstellen bereitgestellt wird. Selbstredend ist dem Einsatz von Dekorfolien oder Antistatik-Folien, sog. ESD-Folien, keine Beschränkung auferlegt, so lange die flexible Lage insgesamt das Formnest für den Grundkörper nur teilweise überdeckt und eine Freimachung an einer Materialeintragstelle vorhanden ist, durch die die Ausgangsmaterialien für einen PU-Schaumkunststoff - ein Polyol und ein Isocyanat - in das Formnest eingebracht werden können, derart, dass diese eingebrachten Materialien unterhalb der flexiblen Lage unter Ausbildung eines PU-Schaumkunststoffs miteinander reagieren können.

Weiter erfindungsgemäß kann nach Einbringen der PU-Schaumkunststoff-erzeugenden Materialen in die Schäumform eine Decke, beispielsweise in Form einer weiteren flexiblen Lage, über die untere Schäumformhälfte gelegt werden, bevor oder währenddessen die Schäumform geschlossen wird. Dies erfolgt bevorzugt beispielsweise durch Einspannen einer Oberdecke an der oberen Schäumformhälfte bevor die Schäumform damit verschlossen wird. Diese oberen Decken werden dann beim Ausreagieren / Aufschäumen der eingebrachten den PU-Schaumkunststoff-erzeugenden Komponenten direkt angeschäumt und fest mit dem PU-Schaumkunststoff verbunden. In diesem Falle weist der orthopädische Schuheinlage-Rohling zwei flexible Lagen auf, wobei die zuletzt eingebrachte flexible Lage die Oberseite des Schuheinlage-Rohlings ausbildet. Solche Oberdecken sind dem Fachmann bestens bekannt und können aus verschiedensten Materialen bestehen, wie z. B. Leder, Alcantara, Vlies, Filz, Kunststoff, Textil, etc.

Für die Erzielung eines orthopädischen Effekts können nicht nur gewisse Bereiche des Schuheinlege-Rohlings gemäß der Erfindung dreidimensional so ausgestaltet sein, dass beispielsweise Pelotten, Längsgewölbe, Fußballenpolster, etc. integriert, d.h. einstückig ausgebildet, bzw. aus Schaumkunststoff geformt werden, sondern diese können vor Einbringen der PU-Schaumkunststoff-Ausgangsmaterialen auch als Einlegeteil zusätzlich eingelegt und fachüblich fixiert werden, derart, dass diese während des Aufschäumen der PU-Schaum-kunststoffMaterialien an der vorgesehenen Stelle verbleiben. Hierbei können auch um- bzw. einschäumbare Einlegeteile, insbesondere zum Verstärken des Längsgewölbebereiches vor dem Einbringen der schaumkunststofferzeugenden Komponenten in die untere Schäumformhälfte eingelegt und fixiert werden und/oder beispielsweise mittels der oberen Schäumformhälfte beim Schlie-ßen in die Kavität eingebracht und gleichzeitig fixiert werden.

Im Folgenden wird beispielhaft anhand von Figuren das erfindungsgemäße Verfahren am Beispiel einer bevorzugten Ausführungsform dargestellt. Die dargestellte Ausführungsform beschränkt jedoch den Erfindungsgedanken nicht, da wie oben bereits angedeutet, eine Vielzahl von Möglichkeiten denkbar sind, wie eine Freimachung in der flexible Lageerreicht werden kann, sodass ein Materialeintrag auf die formgebenden Oberflächen des Formnestes möglich ist. Auch ein Vertauschen der formgebenden Oberflächen für die Oberseite und die Unterseite als auch Ausführungen mit mehr als zwei Materialeintragsstellen und Mehrfachwerkzeuge, etc. sind vom Erfindungsgedanken umfasst. Es zeigen:
- Figur 1:: schematisch eine erste Ausführungsform der Erfindung;
- Figur 2:: einen Längsschnitt durch einen Schuheinlage-Rohling gemäß der Erfindung.

In den Figuren wurden für gleiche Bauteile / -gruppen die gleichen Bezugszeichen vergeben, um die Anschaulichkeit der Figuren zu vereinfachen.

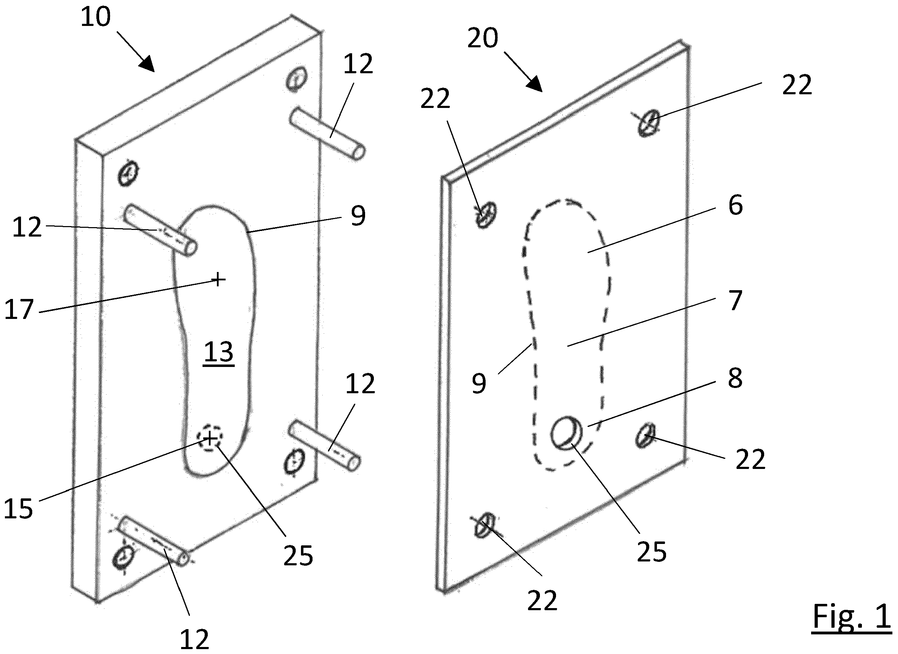

Hierbei zeigt Figur 1 eine untere Schäumformhälfte 10 mit Einspannstiften 12 auf denen eine flexible Lage 20 derart eingespannt / aufgenommen werden kann, dass ein Formnest 13, das in der unteren Schäumformhälfte 10 ausgebildet ist, von der flexible Lage 20 teilweise überdeckt wird. Figur 1 zeigt die flexible Lage 20 aus Anschaulichkeitsgründen beabstandet von der unteren Schäumformhälfte 10, wobei die Kontur 9 der Schuheinlage gestrichelt auf der flexible Lage 20 eingezeichnet ist, um die Lage der Freimachung 25 für den Materialeintrag kenntlich zu machen. In der in Figur 1 dargestellten Ausführungsform ist die Freimachung 25 für den Materialeintrag beispielhaft im Fersenbereich 8 der Schuheinlage 1 in Form einer Öffnung eigebracht. Die Freimachung 25 kann jedoch in anderen bevorzugten Ausführungsformen genauso gut im Längsgewölbebereich 7, bzw. Mittelfußbereich oder beispielsweise im Vorderfußbereich 6 angeordnet sein und beispielsweise ein Kreuzschnitt sein, durch die eine Düse eines Mischkopfes einer RIM-Anlage zum Materialeintrag hindurchtauchen kann.

Erfindungsgemäß wird nach dem Einspannen der flexiblen Lage 20 auf der unteren Schäumformhälfte 10 beispielsweise mittels der Einspannstifte 12 das Ausgangsmaterial, beispielsweise ein mit einem Isocyanat vermischtes Polyol über einen oder mehrere Mischköpfe einer RIM-Schäumanlage an zumindest zwei Materialeintragstellen 15 ,17 in die untere Schäumformhälfte 10 eingebracht. Dabei ist eine erste Materialeintragstelle 15 im Fersenbereich 8 der späteren Schuheinlage vorgesehen, derart, dass das Ausgangsmaterial für das Ausbilden des ersten Teilbereiches 2, hier der Fersenbereich 8, des Schuheinlage-Rohlings 1 durch die Freimachung 25 in der flexiblen Lage 20 erfolgen kann. Zur Veranschaulichung ist die Kontur der Freimachung 25 in der flexiblen Lage 20 als gestrichelte Linie im Formnest 13 eingezeichnet. Eine weitere Materialeintragstelle 17 befindet sich im Vorderfußbereich 6 des späteren Schuheinlage-Rohlings 1, wobei an der Materialeintragstelle 17 das Ausgangsmaterial für das Schäumen des Vorderfußbereiches 6 auf die eingespannte flexible Lage 20 aufgebracht wird.

Nach Einbringen der Ausgangsmaterialien an den beiden Materialeintragstellen 15 und 17 wird die Schäumform mit einer oberen Schäumformhälfte (der Übersichtlichkeit-halber nicht dargestellt) verschlossen, sodass die Ausgangsmaterialien in der von den Formnestern 13 der unteren und oberen Schäumformhälfte gebildeten Kavität Ausreagieren und Aufschäumen können. Ein Fachmann erkennt, dass in einer anderen Ausführungsform beispielsweise zwischen den beiden Materialeintragstellen 15 und 17 eine dritte Materialeintragstelle angeordnet sein kann, um einen weiteren Bereich des Schuheinlage-Rohling 1 mit einem weiteren PU-Schaumkunststoff ausbilden zu können.

Erfindungswesentlich ist jedoch, dass das Ausgangsmaterial zum Erzeugen eines ersten PU-Schaumkunststoff - hier für den Fersenbereich 8 des Schuheinlage-Rohlings 1 - an der ersten Materialeintragstelle 15 durch eine Freimachung 25 in der flexible Lage 20 erfolgt, sodass der den Fersenbereich 8 bildende PU-Schaumkunststoff zwischen den formgebenden Oberflächen im Fersenbereich 8 des Formnestes 13 der unteren Schäumformhälfte und der flexible Lage 20 entstehen kann und die Unterseite des späteren Schuheinlage-Rohlings 1 bildet. Weiter erfindungswesentlich bildet sich der PU-Schaumkunststoff, dessen Ausgangsmaterialien an der zweiten Materialeintragstelle 17 im Vorderfußbereich des späteren Schuheinlage-Rohlings 1 eingebracht wurden, zwischen dem Formnest in der oberen Schäumformhälfte und der flexible Lage 20 aus, sodass die flexible Lage 20 in der Kavität der Schäumform von beiden Seiten mit PU-Schaumkunststoff angeschäumt wird.

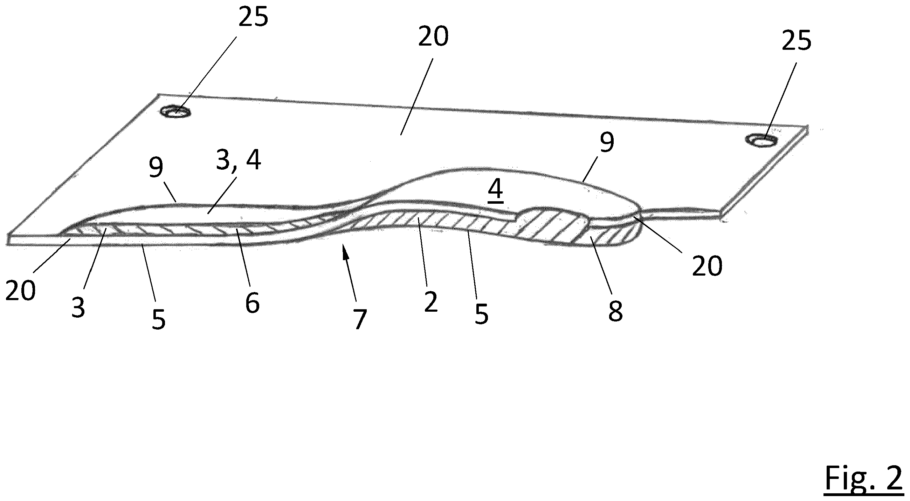

Nachdem die Ausgangsmaterialien ausreagiert haben und die Schäumform-Kavität mit zwei PU-Schaumkunststoffen gefüllt ist, kann der beidseitig an die flexible Lage 20 angeschäumte Schuheinlage-Rohling 1 entnommen werden. Ein Längsschnitt durch einen solchen Schuheinlage-Rohling 1 ist in Figur 2 dargestellt. Hierbei erkennt man, dass ein erster Teilbereich 2 im Fersenbereich 8 des Schuheinlage-Rohlings 1 die Unterseite 5 des Schuheinlage-Rohlings 1 bildet und die flexible Lage 20 in diesem Bereich die Oberseite 4. Im Vorderfußbereich 6 bildet ein zweiter Teilbereich 3 die Oberseite 4 des Schuheinlage-Rohlings 1 und die flexible Lage 20 die Unterseite 5. Im Längsgewölbebereich 7 des Schuheinlage-Rohlings 1 erkennt man eine Überlagerung der beiden PU-Schaumkunststoffe, womit beispielsweise ein aus härterem PU-Schaumkunststoff ausgebildeter Fersenbereich 8 im Bereich 7 des Längsgewölbes durch einen im Vorderfußbereich 6 ausgebildeten, weicheren PU-Schaum-kunststoff gepolstert wird.

Ein Fachmann erkennt weiter aus Figur 2, dass nach einem Ausschneiden oder Ausstanzen entlang der Kontur 9 des Schuheinlage-Rohling 1 ein Rohling für die Anpassung durch einen Schuhorthopäden an einen Fuß bereitgestellt ist, oder eine Schuheinlage-Rohling zum Beziehen einseitig oder beidseitig mit einer Decke zum Ausbilden einer Schuheinlage.

Insgesamt stellt die Erfindung einen orthopädischen Schuheinlage-Rohling 1 und ein Verfahren zu dessen Herstellung bereit, der zumindest zwei Bereiche mit unterschiedlichen PU-Schaumkunststoffen aufweist, wobei die beiden Bereiche durch eine flexible Lage 20 voneinander getrennt sind. Dabei kann der Fersenbereich 8 beispielsweise einen härteren, den Fuß des Trägers einer erfindungsgemäßen Schuheinlage stützenden PU-Schaumkunststoff aufweisen, der die Unterseite 5 der Schuheinlage bildet und die Freimachung 25 in der flexiblen Lage 20 ausfüllt, die in diesem Bereich die Oberseite 4 der Schuheinlage bildet - mit Ausnahme des Bereiches der Freimachung 25. Der Vorderfußbereich 6 weist beispielsweise einen weicheren, den Fuß polsternden PU-Schaumkunststoff auf, der in einem zweiten Teilbereich 3 auf der Oberseite 4 der flexible Lage 20 angeordnet ist, sodass die flexible Lage 20 in diesem Bereich die Unterseite 5 der Schuheinlage bildet. Ein Fachmann erkennt jedoch auch, dass der Polsterkörper des zweiten Teilbereiches 3 nicht die gesamte Oberseite 4 der Schuheinlage bedecken muss, sondern in einer anderen Ausführungsform Teilbereiche der Schuheinlage nur durch die flexible Lage 20 oder nur durch PU-Schaumkunststoff gebildet sein können, wenn beispielsweise eine kurze flexible Lage 20 zur Anwendung kommt, die sich beispielsweise nicht über den gesamten des Fersenbereichs 8 erstreckt. Ein Analoges gilt für den ersten Teilbereich 2 der unterhalb der flexiblen Lage 20 angeordnet ist. Hier kann beispielsweise im Vorderfußbereich 6 der Bereich der Zehen nur durch PU-Schaumkunst-stoff ausgebildet sein, wenn die flexible Lage diesen Bereich frei lässt. Wie oben bereits angedeutet, umfasst der Erfindungsgedanke auch die Herstellung von Schuheinlage-Rohlingen 1 mit mehr als zwei geschäumten Teilbereichen, wobei jedoch erfindungsgemäß zwei Teilbereiche auf jeweils gegenüberliegenden Seiten der flexible Lage 20 angeordnet sind. Mit anderen Worten, ist erfindungsgemäße auf jeder Seite der flexiblen Lage zumindest ein PU-Schaumkunststoff-Teilkörper des Schuheinlage-Rohlings ausgebildet, wobei die beiden Teilkörper von der flexible Lage getrennt werden.

### Bezugszeichenliste

- 1: Schuheinlage-Rohling
- 2: Erster Teilbereich
- 3: Zweiter Teilbereich
- 4: Oberseite
- 5: Unterseite
- 6: Vorderfußbereich
- 7: Längsgewölbebereich
- 8: Fersenbereich
- 9: Kontur Schuheinlage

- 10: Untere Schäumformhälfte
- 12: Einspannstifte
- 13: Formnest
- 15: Erste Materialeintragstelle
- 17: Zweite Materialeintragstelle

- 20: Flexible Lage
- 22: Freimachungen zum Einspannen
- 25: Freimachung für Materialeintrag

## Patentansprüche

1. Orthopädischer Schuheinlage-Rohling (1) mit einem im RIM-Verfahren aus PU-Schaumkunststoff ausgebildeten Grundkörper, der einen ersten Teilbereich (2) und einen zweiten Teilbereich (3) aufweist, wobei die beiden Teilbereiche (2, 3) über eine flächig ausgebildete, sich über zumindest einen Mittenbereich (7) des Schuheinlage-Rohlings (1) erstreckende flexible Lage (20) verbunden sind, wobei
- der erste Teilbereich (2) aus einem ersten PU-Schaumkunststoff geschäumt ist und im Bereich der flexiblen Lage (20) an dessen Unterseite (5) angeschäumt ist, wobei die flexible Lage (20) in diesem Bereich des Schuheinlage-Rohlings (1) die Oberseite (4) des Schuheinlage-Rohlings (1) bildet;
- der zweite Teilbereich (3) aus einem zweiten PU-Schaumkunststoff geschäumt ist und im Bereich der flexiblen Lage (20) an dessen Oberseite (4) angeschäumt ist, wobei die flexible Lage (20) in diesem Bereich des Schuheinlage-Rohlings (1) die Unterseite (5) des Schuheinlage-Rohlings (1) bildet; und
- der erste und/oder zweite PU-Schaumkunststoff in Bereichen ohne flexible Lage (20) sowohl die Oberseite (4) als auch die Unterseite (5) des Schuheinlage-Rohlings (1) bildet.

2. Orthopädischer Schuheinlage-Rohling (1) nach Anspruch 1, bei dem die flexible Lage (20) eine Freimachung (25) aufweist, die mit PU-Schaumkunststoff gefüllt ist, der an der Unterseite (5) des Schuheinlage-Rohlings (1) angeschäumt ist.

3. Orthopädischer Schuheinlage-Rohling (1) nach Anspruch 1 oder 2, bei dem sich der erste und der zweite Teilbereich (2, 3) in einem Mittenbereich (7) des Schuheinlage-Rohlings teilweise überlappen, sodass dort eine Sandwich-artige Struktur vorliegt, deren Mittelschicht die flexible Lage (20) bildet.

4. Orthopädischer Schuheinlage-Rohling (1) nach einem der Ansprüche 1 bis 3, bei dem die flexible Lage (20) aus einem ein- oder mehrschichtigen, flächig ausgebildeten Material besteht, wobei eine Schicht der flexiblen Lage (20) aus einem Material besteht, das für die Komponenten, aus denen der PU-Schaumkunststoff gebildet wird, undurchlässig ist.

5. Orthopädischer Schuheinlage-Rohling nach einem der Ansprüche 1 bis 4, bei dem im ersten Teilbereich (2) und/oder im zweiten Teilbereich (3) ein oder mehrere orthopädisch wirksame Einlegeteile, wie Fersenkeile, Pelotten, Längsgewölbestützen, etc., an- oder eingeschäumt sind.

6. Orthopädischer Schuheinlage-Rohling nach einem der Ansprüche 1 bis 5, bei dem auf der Oberseite (4) und/oder auf der Unterseite (5) zumindest in Teilbereichen eine Decke aufgebracht ist.

7. Verfahren zum Herstellen eines orthopädischen Schuheinlage-Rohlings im RIM-Schäumverfahren nach einem der Ansprüche 1 bis 6, aufweisend die folgenden Schritte:
a) Einspannen und Fixieren einer flexiblen Lage (20) auf eine untere RIM-Schäumformhälfte (10) derart, dass ein Formnest (13) zum Formen einer Unterseite (5)
oder einer Oberseite (4) des Schuheinlage-Rohlings (1) teilweise überdeckt ist;
b) Einbringen von PU-Schaumkunststoff erzeugenden Komponenten in die Schäumformhälfte (10) an einer ersten Materialeinbringstelle (15) und einer zweiten Materialeinbringstelle (17), wobei die erste Materialeinbringstelle (15) an einer Stelle angeordnet ist, an der die flexible Lage (20) das Formnest nicht überdeckt, sodass hier die den PU-Schaumkunststoff erzeugenden Komponenten auf die Oberfläche des Formnestes (13) eingebracht werden, und wobei an der zweiten Material eintragstelle (17) die den PU-Schaumkunststoff erzeugenden Komponenten auf die Oberfläche der flexiblen Lage (20) in die Schäumformhälfte (10) eingebracht werden;
c) Schließen der Schäumform mit einer oberen Schäumformhälfte zum Ausbilden einer Kavität für das Formen des Schuheinlage-Rohlings (1);
d) Ausreagieren lassen der eingebrachten, den PU-Schaumkunststoff erzeugenden Komponenten;
e) Öffnen der Schäumform und Entnahme des beidseitig an die flexible Lage (20) angeschäumten Schuheinlage-Rohlings (1).

8. Verfahren nach Anspruch 7, bei dem die flexible Lage (20) im Bereich der ersten Materialeintragstelle (15) eine Freimachung (25) aufweist.

9. Verfahren nach Anspruch 8, bei dem die Freimachung (25) in Form eines Loches, einer Öffnung oder eines Kreuzschnittes in der flexiblen Lage (20) ausgebildet ist.

10. Verfahren nach einem der Ansprüche 7 bis 9, bei dem das Einbringen der PU-Schaumkunststoff erzeugenden Komponenten an den beiden Materialeinbringstellen (15, 17) zeitgleich oder zeitversetzt erfolgt.

11. Verfahren nach einem der Ansprüche 7 bis 10, bei dem an den beiden Materialeinbringstellen (15, 17) unterschiedliche Komponenten, die unterschiedliche PU-Schaumkunststoffe erzeugen, eingebracht werden.

12. Verfahren nach einem der Ansprüche 7 bis 11, bei dem nach dem Schritt e) der Schuheinlage-Rohling (1) entlang seiner Kontur (9) ausgestanzt oder zugeschnitten wird.

13. Verfahren nach einem der Ansprüche 7 bis 12, bei dem unmittelbar vor dem Schritt c) und/oder mit Ausführen des Schrittes c) ein flächiges Deckenmaterial über die eingebrachten, den PU-Schaumkunststoff erzeugenden Komponenten derart angeordnet wird, dass zumindest Teilbereiche des Formnestes (13) in der unteren Schäumformhälfte (10) überdeckt sind.

14. Verfahren nach einem der Ansprüche 7 bis 13, bei dem vor dem Schritt a) und/oder vor dem Schritt b) orthopädisch wirksame Einlegeteile, wie Fersenkeile, Pelotten, Längsgewölbestützen, etc., in die untere Schäumformhälfte (10) unterhalb und/oder oberhalb der flexiblen Lage (20) eingelegt und fixiert werden, um mit PU-Schaumkunststoff angeschäumt zu werden.

15. Verfahren nach einem der Ansprüche 7 bis 14, bei dem vor dem Schritt a) ein flächiges Deckenmaterial über das Formnest (13) der unteren Schäumformhälfte (10) gelegt wird und zumindest bereichsweise die Oberfläche des Formnestes (13) bildet.

## Claims

1. Orthopaedic shoe insert blank (1) having a base body which is formed from PU foam plastic by the RIM process and has a first partial section (2) and a second partial section (3), whereby the two partial sections (2, 3) are connected by means of a flexible layer (20) which is configured in a planar manner and extends over at least one central section (7) of the shoe insert blank (1), whereby
- the first partial section (2) is foamed from a first PU foam plastic and is foamed in the section of the flexible layer (20) on the lower side (5) thereof, whereby the flexible layer (20) forms the upper side (4) of the shoe insert blank (1) in this section of the shoe insert blank (1);
- the second partial section (3) is foamed from a second PU foam plastic and is foamed in the section of the flexible layer (20) on the upper side (4) thereof, the flexible layer (20) forming the lower side (5) of the shoe insert blank (1) in this section of the shoe insert blank (1); and
- the first and/or second PU foam plastic in sections without a flexible layer (20) forms both the upper side (4) and the lower side (5) of the shoe insert blank (1).

2. Orthopaedic shoe insert blank (1) according to claim 1, in which the flexible layer (20) has a clearance (25) filled with PU foam plastic which is foamed onto the lower side (5) of the shoe insert blank (1).

3. Orthopaedic shoe insert blank (1) according to claim 1 or 2, wherein the first and the second partial sections (2, 3) partially overlap in a central section (7) of the shoe insert blank, forming a sandwich-like structure there, the central ply of which forms the flexible layer (20).

4. An orthopaedic shoe insert blank (1) according to any one of claims 1 to 3, wherein the flexible layer (20) consists of a single-ply or multi-ply material configured in a planar manner, whereby one ply of the flexible layer (20) consists of a material which is impermeable to the components from which the PU foam plastic is formed.

5. Orthopaedic shoe insert blank according to any one of claims 1 to 4, wherein one or more orthopaedically effective inserts, such as heel wedges, pads, longitudinal arch supports, etc. are foamed on or in the first partial section (2) and/or the second partial section (3).

6. Orthopaedic shoe insert blank according to any one of claims 1 to 5, wherein a cover is applied to the upper side (4) and/or to the lower side (5) at least in partial sections.

7. Method of manufacturing an orthopaedic shoe insert blank by the RIM foaming process according to any one of claims 1 to 6, comprising the following steps:
a) Clamping and fixing of a flexible layer (20) onto a lower RIM foaming mould half (10) in such a way that a mould cavity (13) for moulding a lower side (5) or an upper side (4) of the shoe insert blank (1) is partially covered;
b) Introduction of components producing PU foam plastic into the foaming mould half (10) at a first material introduction point (15) and a second material introduction point (17), whereby the first material introduction point (15) is arranged at a point at which the flexible layer (20) does not cover the mould cavity, so that the components producing the PU foam plastic are introduced here onto the surface of the mould cavity (13), and whereby at the second material introduction point (17) the components producing the PU foam plastic are introduced onto the surface of the flexible layer (20) in the foaming mould half (10);
c) Closure of the foaming mould with an upper foaming mould half to form a cavity for moulding the shoe insert blank (1); Allowing of the components that produce the PU foam plastic to react;
d) Opening of the foaming mould and removal of the shoe insert blank (1) foamed onto the flexible layer (20) on both sides.

8. Method according to claim 7, wherein the flexible layer (20) has a clearance (25) in the section of the first material introduction point (15).

9. Method according to claim 8, wherein the clearance (25) is in the form of a hole, an opening or cross-cut in the flexible layer (20).

10. Method according to any one of claims 7 to 9, wherein the introduction of the components producing PU foam plastic at the two material introduction points (15, 17) takes place simultaneously or with a time delay.

11. Method according to any one of claims 7 to 10, wherein different components producing different PU foam plastics are introduced at the two material introduction points (15, 17).

12. Method according to any one of claims 7 to 11, wherein after step e) the shoe insert blank (1) is punched or cut along its contour (9).

13. Method according to any one of claims 7 to 12, wherein immediately before step and/or by carrying out step c), a planar covering material is arranged over the components introduced to produce the PU foam plastic in such a way that at least partial sections of the mould cavity (13) in the lower foaming mould half (10) are covered.

14. Method according to one of claims 7 to 13, wherein orthopaedically effective inserts, such as heel wedges, pads, longitudinal arch supports, etc. are inserted and fixed in the lower foaming mould half (10) below and/or above the flexible layer (20) before step a) and/or before step b) in order to be foamed on with PU foam plastic.

15. Method according to any one of claims 7 to 14, wherein prior to step a) a planar covering material is placed over the mould cavity (13) of the lower foaming mould half (10) and forms the surface of the mould cavity (13) at least in sections.

## Revendications

1. Ébauche de semelle intérieure orthopédique (1) dotée d'un corps de base en mousse de plastique PU façonné au moyen d'un procédé RIM, présentant une première partie (2) et une deuxième partie (3), les deux parties (2, 3) étant reliées par une couche flexible formée en surface qui s'étend sur au moins une zone centrale (7) de l'ébauche de semelle intérieure (1),
- la première partie (2) étant formée à partir d'une première mousse de plastique PU et moulée sous forme de mousse sur sa face inférieure (5) dans la zone de la couche flexible (20), la couche flexible (20) formant la face supérieure (4) de l'ébauche de la semelle intérieure (1) dans la zone de l'ébauche de semelle intérieure (1) ;
- la deuxième partie (3) étant formée à partir d'une deuxième mousse de plastique PU et moulée sous forme de mousse sur sa face supérieure (4) dans la zone de la couche flexible (20), la couche flexible (20) formant la face inférieure (5) de l'ébauche de la semelle intérieure (1) dans la zone de l'ébauche de semelle intérieure (1) ; et
- la première et/ou la deuxième mousse(s) de plastique dans les zones sans couche flexible (20) formant à la fois la face supérieure (4) et la face inférieure (5) de l'ébauche de semelle intérieure (1).

2. Ébauche de semelle intérieure orthopédique (1) selon la revendication 1, dans laquelle la couche flexible (20) présente un évidement (25) qui est rempli de mousse de plastique PU qui est moulée sur la face inférieure (5) de l'ébauche de semelle intérieure (1).

3. Ébauche de semelle intérieure orthopédique (1) selon la revendication 1 ou 2, dans laquelle les première et deuxième parties (2, 3) se chevauchent en partie dans une zone centrale (7) de l'ébauche de semelle intérieure, présentant ainsi une structure de type sandwich dont la strate centrale forme la couche flexible (20).

4. Ébauche de semelle intérieure orthopédique (1) selon l'une quelconque des revendications 1 à 3, dans laquelle la couche flexible (20) est constituée d'un matériau à une ou plusieurs strates formé en surface, l'une des strates de la couche flexible (20) étant composée d'un matériau imperméable aux composants dont la mousse de plastique PU est formée.

5. Ébauche de semelle intérieure orthopédique selon l'une quelconque des revendications 1 à 4, dans laquelle un ou plusieurs inserts à vocation orthopédique, tels que des cales de talon, des pelotes, des supports longitudinaux de voûte, etc., sont appliqués ou insérés sous forme de mousse dans la première partie (2) et/ou dans la deuxième partie (3).

6. Ébauche de semelle intérieure orthopédique selon l'une quelconque des revendications 1 à 5, dans laquelle une couverture est appliquée sur la face supérieure (4) et/ou sur la face inférieure (5) au moins dans des zones partielles.

7. Procédé de fabrication d'une ébauche de semelle intérieure orthopédique au moyen d'un procédé de moussage RIM selon l'une quelconque des revendications 1 à 6, comprenant les étapes suivantes :
a) serrage et fixation d'une couche flexible (20) sur une moitié inférieure du moule de moussage RIM (10), de telle sorte qu'une cavité de moulage (13) soit partiellement recouverte pour former une face inférieure (5) ou une face supérieure (4) de l'ébauche de semelle intérieure (1) ;
b) introduction de composants générant de la mousse de plastique PU dans la moitié du moule de moussage (10) à un premier point d'introduction de matériau (15) et à un deuxième point d'introduction de matériau (17), le premier point d'introduction de matériau (15) étant disposé à un endroit où la couche flexible (20) ne recouvre pas la cavité de moulage, de telle sorte que les composants générant la mousse de plastique PU soient introduits ici à la surface de la cavité de moulage (13), et les composants générant la mousse de plastique PU étant introduits dans la moitié du moule de moussage (10) au niveau du deuxième point d'introduction de matériau (17) à la surface de la couche flexible (20) ;
c) fermeture du moule de moussage avec une moitié supérieure du moule de moussage afin de former une cavité pour le moulage de l'ébauche de semelle intérieure (1) ;
d) laisser réagir les composants introduits qui génèrent la mousse de plastique PU ;
e) ouverture du moule de moussage et retrait de l'ébauche de semelle intérieure (1) moulée par moussage sur les deux côtés de la couche flexible (20).

8. Procédé selon la revendication 7, dans lequel la couche flexible (20) présente un évidement (25) dans la zone du premier point d'introduction de matériau (15).

9. Procédé selon la revendication 8, dans lequel l'évidement (25) est réalisé en forme de trou, d'ouverture ou d'incision en croix dans la couche flexible (20).

10. Procédé selon l'une quelconque des revendications 7 à 9, dans lequel l'introduction des composants générant la mousse de plastique PU s'effectue simultanément ou en décalé aux deux points d'introduction de matériau (15, 17).

11. Procédé selon l'une quelconque des revendications 7 à 10, dans lequel différents composants générant diverses mousses de plastique PU sont introduits au niveau des deux points d'introduction de matériau (15, 17).

12. Procédé selon l'une quelconque des revendications 7 à 11, dans lequel, après l'étape e), l'ébauche de semelle intérieure (1) est coupée ou découpée à la machine le long de son contour (9).

13. Procédé selon l'une quelconque des revendications 7 à 12, dans lequel, immédiatement avant l'étape c) et/ou avec l'exécution de l'étape c), un matériau de couverture en surface est disposé sur les composants introduits générant la mousse de plastique PU, de telle sorte qu'au moins des zones partielles de la cavité de moulage (13) soient recouvertes dans la moitié inférieure du moule de moussage (10).

14. Procédé selon l'une des revendications 7 à 13, dans lequel, avant l'étape a) et/ou avant l'étape b), des inserts à vocation orthopédique, tels que des cales de talon, des pelotes, des supports longitudinaux de voûte, etc., sont insérés et fixés dans la moitié inférieure du moule de moussage (10), en dessous et/ou au-dessus de la couche flexible (20), afin d'être moulés avec de la mousse de plastique PU.

15. Procédé selon l'une quelconque des revendications 7 à 14, dans lequel, avant l'étape a), un matériau de couverture en surface est placé au-dessus de la cavité de moulage (13) de la moitié inférieure du moule de moussage (10) et forme, au moins par endroits, la surface de la cavité de moulage (13).
